# EUROPÄISCHE PATENTSCHRIFT

(11) **EP 0 695 237 B1**
(45) Veröffentlichungstag und Bekanntmachung des Hinweises auf die Patenterteilung: **30.07.1997**
(21) Anmeldenummer: 94910336.0
(22) Anmeldetag: 14.03.1994
(51) Int. Cl.: B44C 1/17, B41M 3/14, B60R 13/10, B42D 15/10, B44F 1/12

(54) **HEISSPRÄGEFOLIE**
HOT BLOCKING FOIL
FEUILLE A MARQUER A CHAUD

(30) Priorität: 24.04.1993 DE 4313519
(43) Veröffentlichungstag der Anmeldung: 07.02.1996
(73) Patentinhaber: LEONHARD KURZ GMBH & CO., 90763 Fürth (DE)
(72) Erfinder: SÜSSNER, Hubert, D-90522 Oberasbach (DE)
(74) Vertreter: LOUIS, PÖHLAU, LOHRENTZ & SEGETH
(86) Internationale Anmeldenummer: DE9400287
(87) Internationale Veröffentlichungsnummer: WO9425295

(56) Entgegenhaltungen:
- EP-A- 0 271 941
- EP-A- 0 407 615
- EP-A- 0 576 942
- WO-A-92/00856
- DE-A- 2 852 661
- DATABASE WPI Week 9131, Derwent Publications Ltd., London, GB; AN 91-227737 & JP,A,3 147 892 (MITSUBISHI RAYON KK) 24. Juni 1991

## Beschreibung

Die Erfindung betrifft eine Heissprägefolie zur Herstellung von Kraftfahrzeug-Nummernschildern, bestehend aus einem Trägerfilm und einer von diesem ablösbaren Übertragungslage, welche - vom Trägerfilm ausgehend - eine transparente Schutzlackschicht, wenigstens eine Farblackschicht sowie eine, gegebenenfalls von der Farblackschicht gebildete, Kleberschicht zur Festlegung der Übertragungslage auf einem zu dekorierenden Substrat, beispielsweise der Trägerplatte eines Kraftfahrzeug-Nummernschildes, umfasst.

Es ist bekannt, Kraftfahrzeug-Nummernschilder unter Verwendung von Heissprägefolien zu erzeugen, wobei mittels einfarbiger Heissprägefolien die Untergrund-Lackschicht oder die hiervon unterschiedliche Lackschicht der auf dem Nummernschild vorhandenen Kennzeichen, zum Beispiel Buchstaben, Ziffern, Wappen etc. erzeugt werden. Derartige Nummernschilder zeichnen sich gegenüber den bisher üblichen Nummernschildern einerseits durch grosse Haltbarkeit und andererseits dadurch aus, dass besondere Sicherheitsmassnahmen während der Herstellung vermieden werden können, weil nicht mehr mit flüssigen Lacken gearbeitet wird. Die Prägefolien-Abfälle nach dem Prägen der Nummernschilder können ohne Schwierigkeiten und insbesondere in einwandfreier Weise entsorgt werden.

Vor allem im Hinblick auf die in jüngster Zeit stark zunehmende Zahl von Kraftfahrzeug-Diebstählen und die hierbei in grossem Umfang verwendeten gefälschten Nummernschilder wäre es nun wünschenswert, eine Prägefolie zur Verfügung zu haben, die es gestattet, die Nummernschilder mit besonderen, eine Fälschung erschwerenden Kennzeichen zu versehen, wobei ausserdem die Möglichkeit gegeben sein sollte, in einfacher Weise und mittels mechanischer Einrichtungen festzustellen, ob es sich um ein gefälschtes Nummernschild handelt oder nicht.

Zur Lösung dieser Aufgabe wird nach der Erfindung nun vorgeschlagen, eine Heissprägefolie, wie sie vorzugsweise zur Herstellung von Kraftfahrzeug-Nummernschildern eingesetzt werden kann, derart auszubilden, dass zwischen der transparenten Schutzlackschicht und der wenigstens einen Farblackschicht zumindest bereichsweise eine bestimmte graphische Elemente darstellende Dekorlackschicht aus einem bei Bestrahlung mit Licht ausgewählter Wellenlänge lumineszierende Pigmente enthaltenden Lack vorgesehen ist.

Die erfindungsgemässe Heißprägefolie unterscheidet sich somit von den bisher verwendeten Farb-Prägefolien, wie sie zum Beispiel auch bei der Herstellung von KFZ-Nummernschildern Verwendung fanden, dadurch, dass zwischen der transparenten Schutzlackschicht und der eigentlichen Farblackschicht eine zusätzliche Dekorlackschicht, und zwar in Form bestimmter graphischer Elemente, vorgesehen ist, wobei die Dekorlackschicht von einem Lack gebildet wird, der nur bei Bestrahlung mit Licht ausgewählter Wellenlänge lumineszierende Pigmente enthält. Auf diese Weise kann erreicht werden, dass bei üblicher Beleuchtung des mit der Prägefolie versehenen Gegenstandes, zum Bespiel Nummernschildes, nicht feststellbar ist, ob nun Sicherheitselemente vorhanden sind oder nicht. Erst wenn eine Bestrahlung mit Licht der vorbestimmten Wellenlänge erfolgt, werden die zusätzlichen graphischen Elemente sichtbar, so dass die Echtheit des Nummernschilds etc. ohne Probleme festgestellt werden kann, und zwar bei entsprechender Wahl und Gestaltung der graphischen Elemente durchaus auch mittels angepasster Geräte. Durch die Anbringung der Dekorlackschicht zwischen transparenter Schutzlackschicht und Farblackschicht wird weitgehend eine Entfernung bzw. Beschädigung der graphischen Elemente der Dekorlackschicht verhindert. Zumindest fällt es aber auf, wenn versucht wurde, die graphischen Elemente bzw. die Deckorlackschicht zu entfernen, weil dann die transparente Schutzlackschicht beschädigt ist, was aber üblicherweise zur Folge hat, dass die Oberfläche der Farblackschicht sich in deutlich wahrnehmbarer Weise verändert.

Aus der EP-A-0271941 ist eine Folie bekannt, die als Schutzfolie für ein Dokument od.dgl. verwendet werden kann.
Aus der WO-A-92/00856 ist eine Heissprägefolie bekannt, die als Sicherheitselement für Banknoten oder sonstige Wertpapiere verwendet werden kann.
Aus der DE-A-2852661 sind Kraftfahrzeug-Nummerschilder bekannt, die eine oder mehrere Markierungen od.dgl. besitzen, die nur durch Anstrahlung im UV- und/oder IR-Stralungsbereich für das menschliche Auge sichtbar gemacht werden können.
Aus der US-A-4368979 sind Kraftfahrzeug-Nummerschilder, mit IR-Licht reflektiv Hologrammen, bekannt.
Aus der EP-A-0576942 (Stand der Technik gemäß Art. 54(3)(4) EPÜ) ist eine Plakette zur Anbringung an Kraftfahrzeug-Kennzeichen bekannt, die eine Trägerschicht hat, auf die Informationselemente aufgebracht sind. Die Trägerschicht kann nicht kopierfähige Farbelemente enthalten, der Informationselemente ausbildende Stoff kann eine Substanz enthalten, die bei Kontaktierung mit Lösungsmitteln aus den Informationselementen ausgelöst wird und sich erfließt.

Es ist zwar aus der DE-31 51 012 A1 ein Verfahren zum kennzeichnen von Wertgegenständen, beispielsweise Bildern, Porzellan und Holzgegenständen, bekannt, bei denen mittels nur bei UV-Bestrahlung sichtbarer Farbstoffe an geeigneten Stellen der Oberfläche eine Markierung mit einem optischen Aufheller und/oder einem nahezu farblosen Fluorenzenzfarbstoff aufgebracht wird. Bei dem bekannten Verfahren erfolgt die Aufbringung von Hand und es muss die Markierung zusätzlich mit einer Deckschicht eines vernetzbaren Polymeren fixiert werden. Diese Vorgehensweise ist beispielsweise bei der Herstellung von KFZ-Kennzeichen nicht möglich, weil sie mit viel zu grossem Aufwand verbunden wäre. Darüber hinaus lassen sich von Hand normalerweise keine maschinenlesbaren graphischen Elemente aufbringen. Ein besonders wesentlicher Mangel des bekannten Verfahrens ist aber darin zu sehen, dass es ausgeschlossen erscheint, die zur Fixierung der UV-sichtbaren Markierung aufzubringende Deckschicht so gleichmässig anzubringen, dass ein Versuch der Entfernung der UV-lesbaren Markierung auf jeden Fall festgestellt werden kann. Bei dem bekannten Verfahren bereitet es üblicherweise kaum Schwierigkeiten, die Deckschicht gegebenenfalls zu ergänzen. Das bekannte Verfahren muss deswegen dem Fachmann als für die Zwecke vorliegender Erfindung ungeeignet erscheinen und kann deswegen keine Anregung im Sinne der Erfindung geben.

Besonders günstig ist es, wenn der Lack der Dekorlackschicht Pigmente enthält, die bei Bestrahlung mit UV-Licht lumineszieren, weil es derartige Pigmente in grosser Anzahl gibt und ausserdem auch UV-Lichtquellen geeigneter Ausbildung bereits zur Verfügung stehen. Beispielsweise lässt sich bei Verwendung von UV-anregbaren Pigmenten ohne weiteres bei einem vorbeifahrenden Kraftfahrzeug prüfen, und zwar auch maschinell, ob dieses mit einem ordnungsgemässen, das heisst die entsprechenden graphischen Elemente aufweisenden, Kennzeichen versehen ist oder ein gefälschtes Kennzeichen trägt.

Als besonders günstig hat es sich herausgestellt, wenn bei einer Heissprägefolie gemäss der Erfindung die Schutzlackschicht und/oder die Dekorlackschicht als UV-Absorber wirkende Additive in einem Anteil von 0,5 bis 2 Gew.% und/oder HALS-Stabilisatoren in einem Anteil von 0,1 bis 1 Gew.% enthält, wobei vorzugsweise der Anteil von UV-Absorber etwa 1,5 Gew.% und der von HALS-Stabilisator etwa 0,5 Gew.% beträgt.

Wenn derartige Zusätze in der Schutz- bzw. Dekorlackschicht vorhanden sind, ist sichergestellt, dass die in der Dekorlackschicht vorhandenen Leuchtpigmente auch bei längerer Gebrauchsdauer ihre lumineszierenden Eigenschaften nicht verlieren. Leuchtpigmente sind nämlich im allgemeinen nicht UV-stabil, weshalb sie unter Umständen bei Kraftfahrzeug-Kennzeichen, die ja überwiegend im freien bzw. bei Tageslicht verwendet werden, unter Umständen bereits nach relativ kurzer Zeit ihre lumineszierenden Eigenschaften verlieren würden, was gerade durch die UV-Absorber bzw. HALS-Stabilisatoren verhindert wird.

Wenn, wie nach der Erfindung weiter vorgesehen, die Farbpigmente der Farblackschicht und die lumineszierenden Pigmente der Dekorlackschicht farblich aneinander angepasst sind, das heißt, daß gleiche oder im Farbton einander entsprechende Farben verwendet werden, ergibt sich der Vorteil, dass bei Beleuchtung mit normalem Licht das Vorhandensein der speziellen, nur bei Bestrahlung mit Licht bestimmter Wellenlänge lumineszierenden graphischen Elemente nicht festgestellt werden kann, wodurch einem Unbefugten die Prüfung, ob ein mit der Prägefolie gefertigtes Kennzeichen echt oder falsch ist, erschwert wird. Darüber hinaus gestattet diese Ausbildung der Prägefolie die Herstellung von Kennzeichnungsschildern, die sich im Aussehen von den bisher üblichen Schildern nicht unterscheiden.

Schliesslich liegt es im Rahmen der Erfindung, dass die Dekorlackschicht in einem Druckverfahren aufgebracht ist, weil sich auf diese Weise die Dekorlackschicht besonders einfach aufbringen lässt, gleichzeitig aber eine grosse Vielzahl von Gestaltungsmöglichkeiten für die graphischen Elemente gegeben ist.

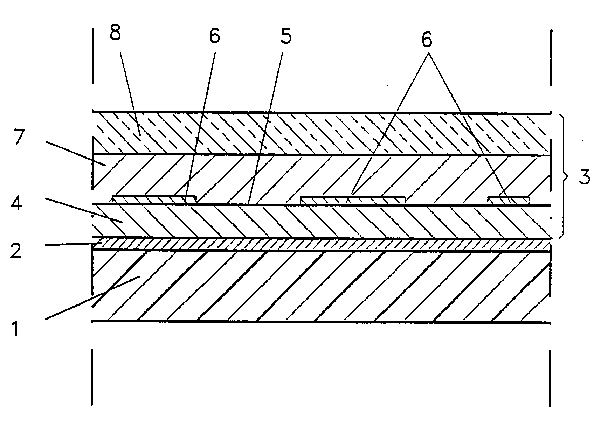

Weitere Merkmale, Einzelheiten und Vorteile der Erfindung ergeben sich aus der folgenden Beschreibung eines bevorzugten Ausführungsbeispiels einer Heissprägefolie nach der Erfindung anhand der Zeichnung, in der schematisch ein Abschnitt einer Heissprägefolie im Schnitt dargestellt ist.

Es sei darauf hingewiesen, dass die Darstellung in der beiliegenden Zeichnung hinsichtlich der Schichtdicken nicht massstabgetreu ist.

Die Heissprägefolie des Ausführungsbeispiels umfasst einen Trägerfilm 1, an dem unter Zwischenschaltung einer Wachsschicht 2 eine insgesamt mit 3 bezeichnete Übertragungslage angeordnet ist. Die Wachsschicht 2 dient dazu, ein Ablösen der Übertragungslage 3 von dem Trägerfilm 1 bei Verwendung der Heissprägefolien zu erleichtern. Beim Heissprägen wird ja die Übertragungslage unter Einwirkung von Druck und Wärme auf ein Substrat aufgedrückt. Durch die Wärme schmilzt die Wachsschicht 2, wodurch die Übertragungslage 3 leicht vom Trägerfilm 1 freigegeben wird.

Die Übertragungslage 3 umfasst - vom Trägerfilm 1 ausgehend - eine transparente Schutzlackschicht 4. Auf die dem Trägerfilm 1 abgekehrte Oberfläche 5 der Schutzlackschicht 4 ist in einem Druckverfahren eine bestimmte graphische Elemente darstellende Dekorlackschicht 6 aufgebracht.

Die Dekorlackschicht 6 wiederum ist von einer Farblackschicht 7 abgedeckt. Den Abschluss der Schichtenfolge der Übertragungslage 3 bildet eine Kleberschicht 8, beispielsweise ein Heisssiegelkleber, wobei in Abhängigkeit vom Material des Substrats, auf dem die Übertragungslage 3 befestigt werden soll, für die Kleberschicht 8 die generell aus der Literatur bekannten, wärmeaktivierbaren Kleber auf der Basis von thermoplastischen Acrylaten, PVC-Copolymeren, Polyestern bzw. thermoplastischen Polyuretanen oder Mischungen dieser Bindemittel verwendet werden können.

Der Trägerfilm 1 ist üblicherweise eine Polyesterfolie einer Dicke von 19 bis 23 µm. Die Wachsschicht 2 hat eine Stärke von unter 1 µm und besteht aus einem bei der üblicherweise verwendeten Prägetemperatur leicht schmelzenden Wachs. Die Schutzlackschicht 4 wird üblicherweise, abhängig von dem Anwendungsgebiet, in einer Stärke von 1 bis 10 µm aufgebracht, wobei die grössere Schichtstärke für Anwendungsfälle vorgesehen ist, bei denen eine stärkere mechanische Beanspruchung erfolgt. Die Dekorlackschicht 6 besitzt eine Stärke von etwa 0,5 bis 2 µm. Der Farblack hat - wiederum abhängig von dem jeweiligen Anwendungsgebiet - eine Stärke von 2 bis 10 µm. Die Heisssiegelkleberschicht schliesslich besitzt üblicherweise eine Dicke von 0,5 bis 5 µm.

Die diversen Lackschichten können beispielsweise wie folgt zusammengesetzt sein:

### Schutzlackschicht 4

| | |
|---|---|
| Methylethylketon | 40 Teile |
| Toluol | 30 Teile |
| Polymethylmethacrylat (MG: ca.100 000, Dichte : 1,18 g/ccm) | 20 Teile |
| Polyvinylidenfluorid (Dichte ca. 1,7 g/ccm) | 8 Teile |
| UV-Absorber (Benzotriazolderivat, Dichte 1,17g/ccm) | 1,5 Teile |
| HALS-Stabilisator (Tetramethylpiperidinderivat) | 0,5 Teile |

### Dekorlackschicht 6

| | |
|---|---|
| Methylethylketon | 30 Teile |
| Toluol | 25 Teile |
| Polymethylmethacrylat (MG ca. 100 000, Dichte : 1,18 g/ccm) | 30 Teile |
| Hochmolekulares Dispergieradditiv | 2 Teile |
| UV-Absorber (Benzotriazolderivat, Dichte : 1,17 g/ccm) | 1,5 Teile |
| HALS-Stabilisator (Tetramethylpiperidinderivat) | 0,5 Teile |
| Anorganisches oder organisches Leuchtpigment | 10 Teile |

Als anorganische Leuchtpigmente können zum Beispiel Zinksulfide bzw. Zinkwolframate eingesetzt werden. Beispiele für organische Leuchtpigmente sind Benzoxazolderivate und Dihydroxynaphthaldazinderivate. Entsprechende Leuchtpigmente werden beispielsweise von der Firma Riedel de Haen AG in Seelze unter der Bezeichnung "Lumilux" (eingetragenes Warenzeichen) vertrieben.

### Farblackschicht 7

| | |
|---|---|
| Methylethylketon | 40 Teile |
| Toluol | 20 Teile |
| Polymethacrylat (MG : 60000, Dichte : 1,13 g/ccm) | 15,5 Teile |
| Acrylatpolymer (40% in Toluol, Tg=50°C) | 10,5 Teile |
| Polyvinylidenfluorid (Dichte ca. 1,7 g/ccm) | 3 Teile |
| Hochmolekulares Dispergieradditiv | 4 Teile |
| Pigment Red 149 | 6 Teile |
| Pigment Red 122 | 1 Teil |

### Heisssiegelkleberschicht 8

| | |
|---|---|
| Methylethylketon | 65 Teile |
| Toluol | 17 Teile |
| Lineares thermoplastisches Polyurethan (Dichte : 1,15g/ccm) | 8 Teile |
| Ungesättigtes Polyesterharz (Dichte : 1,23 g/ccm, Säurezahl 15) | 8 Teile |
| Amorphe Kieselsäure (Partikelgrösse ca. 10µ) | 2 Teile |

Wachsschicht 2, Schutzlackschicht 4, Dekorlack 6, Farblackschicht 7 und Kleberschicht 8 werden üblicherweise auf den Trägerfilm 1 in entsprechenden Druckverfahren aufgebracht. Diese Verfahren sind von der Herstellung von Heissprägefolien allgemein geläufig, so dass sie nicht näher erläutert werden müssen.

Es sei der Vollständigkeit halber darauf hingewiesen, dass selbstverständlich die Farblackschicht 7 nicht unbedingt eine einheitliche Schicht sein muss. Es wäre vielmehr durchaus möglich, als Farblackschicht 7 eine gemusterte Schicht vorzusehen, beispielsweise auch eine Schicht, die jederzeit sichtbare, zusätzliche Sicherheitselemente in Form von Wappen etc., aufweist. In ähnlicher Weise könnte auch die Schutzlackschicht 4 graphisch durch Verwendung unterschiedlicher Lacke gestaltet sein, wobei insbesonders die Schutzlackschicht 4 nicht farblos sein muss sondern auch eingefärbt sein kann.

Im Gebrauch wird die Heissprägefolie mit ihrer Kleberschicht 8 gegen das zu dekorierende Substrat angelegt und dann von der Trägerfilmseite her Hitze und Druck aufgebracht. Dabei wird der Kleber der Kleberschicht 8 aktiviert, wodurch die Übertragungslage 3 am Substrat haftet. Gleichzeitig schmilzt die Wachsschicht 2, so dass der Trägerfilm (1) von der Übertragungslage 3, die auf dem Substrat verbleibt, abgelöst werden kann.

## Patentansprüche

1. Heissprägefolie zur Herstellung von Kraftfahrzeug-Nummernschildern, bestehend aus einem Trägerfilm (1) und einer von diesem ablösbaren Übertragungslage (3), welche - vom Trägerfilm (1) ausgehend - eine transparente Schutzlackschicht (4), wenigstens eine Farblackschicht (7) sowie eine, ggf. von der Farblackschicht gebildete, Kleberschicht (8) zur Festlegung der Übertragungslage (3) auf einem zu dekorierenden Substrat umfasst,
**dadurch gekennzeichnet,**
dass zwischen der Schutzlackschicht (4) und der wenigstens einen Farblackschicht (7) zumindest bereichsweise eine bestimmte graphische Elemente darstellende Dekorlackschicht (6) aus einem bei Bestrahlung mit UV-Licht lumineszierende Pigmente enthaltenden Lack vorgesehen ist, und dass die Schutzlackschicht (4) und/oder die Dekorlackschicht (6) als UV-Absorber wirkende Additive in einem Anteil von 0,5 bis 2 Gew.% und/oder HALS-Stabilisatoren in einem Anteil von 0,1 bis 1 Gew.% enthält.

2. Heissprägefolie nach Anspruch 1,
**dadurch gekennzeichnet,**
dass die Schutzlackschicht (4) und/oder die Dekorlackschicht (6) etwa 1,5 Gew.% UV-Absorber und/oder etwa 0,5 Gew.% HALS-Stabilisatoren enthält.

3. Heissprägefolie nach Anspruch 1 oder 2,
**dadurch gekennzeichnet,**
dass die Farbpigmente der Farblackschicht (7) und die lumineszierenden Pigmente der Dekorlackschicht (6) farblich aneinander angepasst sind, das heißt, daß die Farbpigmente der Farblackschicht (7) und die lumineszierenden Pigmente der Dekorlackschicht (6) gleiche oder im Farbton einander entsprechende Farben aufweisen.

4. Heissprägefolie nach einem der Ansprüche 1 bis 3,
**dadurch gekennzeichnet,**
dass die Dekorlackschicht (6) in einem Druckverfahren aufgebracht ist.

## Claims

1. Hot-stamping foil for producing motor-vehicle number plates, consisting of a carrier film (1) and, detachable from the latter, a transfer lamina (3) which comprises - starting from the carrier film (1) - a transparent protective coat (4), at least one colour coat (7) and, formed if desired by the colour coat, an adhesive coat (8) for fixing the transfer lamina (3) on a substrate that is to be decorated, characterized in that provided between the protective coat (4) and the colour coat (7), of which there is at least one, there is at least in certain regions a decorative coat (6) representing defined graphic elements and consisting of a coating material containing pigments which are luminescent on irradiation with UV light, and in that the protective coat (4) and/or the decorative coat (6) comprises UV-absorbing additives in a proportion of from 0.5 to 2% by weight and/or HALS stabilizers in a proportion of from 0.1 to 1% by weight.

2. Hot-stamping foil according to Claim 1, characterized in that the protective coat (4) and/or the decorative coat (6) comprises about 1.5% by weight of UV absorber and/or about 0.5% by weight of HALS stabilizers.

3. Hot-stamping foil according to Claim 1 or 2, characterized in that the coloured pigments of the colour coat (7) and the luminescent pigments of the decorative coat (6) are adapted to one another in terms of colour; in other words, in that the colour pigments of the colour coat (7) and the luminescent pigments of the decorative coat (6) have colours which are the same or which correspond to one another in shade.

4. Hot-stamping foil according to one of Claims 1 to 3, characterized in that the decorative coat (6) is applied in a printing process.

## Revendications

1. Feuille à marquer à chaud pour la fabrication de plaques minéralogiques d'automobiles, comprenant un film support (1) et une couche de transfert (3) détachable du film, qui comprend, en partant du film support (1), une couche transparente de laque protectrice (4), au moins une couche de laque colorée (7) et une couche de colle (8), éventuellement formée par la couche de laque colorée, pour la fixation de la couche de transfert (3) sur un substrat à décorer, caractérisé en ce que, entre la couche de vernis protecteur (4) et la ou moins une couche de laque colorée (7), il est prévu au moins par endroits une couche de laque décorative (6) représentant certains éléments graphiques à base d'une laque contenant des pigments luminescents en cas d'exposition à la lumière ultraviolette, et en ce que la couche de laque protectrice (4) et/ou la couche de laque décorative (6) contient des additifs agissant comme absorbant ultraviolet dans une proportion de 0,5 à 2 % de poids et/ou des stabilisateurs HALS dans une proportion de 0,1 à 1 % de poids.

2. Feuille à marquer à chaud selon la revendication 1, caractérisée en ce que la couche de laque protectrice (4) et/ou la couche de laque décorative (6) contient environ 1,5 % de poids d'absorbant ultraviolet et/ou environ 0,5 % de poids de stabilisateurs HALS.

3. Feuille à marquer à chaud selon la revendication 1 ou 2 caractérisée en ce que les pigments colorés de la couche de laque colorée (7) et les pigments luminescents de la couche de laque décorative (6) sont assortis au niveau de la couleur, ce qui veut dire que les pigments colorés de la laque colorée (7) et les pigments luminescents de la couche de laque décorative (6) présentent des couleurs identiques ou correspondantes dans la tonalité.

4. Feuille à marquer à chaud selon l'une quelconque des revendications 1 à 3, caractérisée en ce que la couche de laque décorative (6) est appliquée par un procédé d'impression.
